# EUROPEAN PATENT SPECIFICATION

(11) **EP 4 357 191 B1**
(45) Date of publication and mention of the grant of the patent: **11.11.2026**
(21) Application number: 22824260.8
(22) Date of filing: 15.06.2022
(51) Int. Cl.: G06F 1/3203

(54) **WAKE-UP CIRCUIT AND ELECTRONIC DEVICE COMPRISING SAME**
AUFWECKSCHALTUNG UND ELEKTRONISCHE VORRICHTUNG DAMIT
CIRCUIT DE RÉVEIL ET DISPOSITIF ÉLECTRONIQUE LE COMPRENANT

(30) Priority: 17.06.2021 CN 202110669111
(43) Date of publication of application: 24.04.2024
(73) Proprietor: ZHEJIANG EV-TECH CO., LTD., Huzhou, Zhejiang 310012 (CN)
(72) Inventor: HAO, Shiqiang, Huzhou, Zhejiang 310012 (CN); ZHANG, Chenglin, Huzhou, Zhejiang 310012 (CN); HE, Qiang, Huzhou, Zhejiang 310012 (CN); PING, Dinggang, Huzhou, Zhejiang 310012 (CN)
(74) Representative: dompatent
(86) International application number: PCT/CN2022/099031
(87) International publication number: WO 2022/262785

(56) References cited:
- CN-A- 109 774 534
- CN-A- 112 436 576
- CN-A- 113 258 765
- CN-U- 210 912 030
- US-A1- 2018 208 066
- US-B1- 7 759 826

## Description

### PRIORITY CLAIM

This application claims the benefit of and priority to Chinese patent titled "a wake-up circuit and an electronic device comprising the circuit" with the Application No. 202110669111.1, filed on June 17, 2021.

### TECHNICAL FIELD

The present invention relates to the field of power supplies, in particular a wake-up circuit.

### BACKGROUND

With the development of electric vehicle technology, intelligence is becoming an important feature, and the use of a wake-up circuit to waken the electric vehicle charging mode becomes necessary.

The current wake-up signals include a KL15 wake-up signal (engine ignition wake-up signal), a CC wake-up signal (used to confirm the connection status of the charging gun and the electric vehicle, and to determine the maximum current that the charging cable can withstand), a CP wake-up signal, and a wake-up signal of the whole vehicle message. The only signal that the charging pile can control is the CP signal. The current CP signal mainly includes a CP signal changed from a low level to a high level, a CP signal changed from a low level to a PWM wave and a CP signal from a high level to a PWM wave, corresponding to a plug-in gun wake-up mode, a reservation charging mode and a plug-in gun reservation charging mode, respectively.

However, the current wake-up circuits can only realize one of the above wake-up modes, making the wake-up method for the electric vehicle single. Or, in order to be compatible with the above mentioned plug-in gun wake-up mode, the reservation charging mode and the plug-in gun reservation charging mode, multiple wake-up circuits are required, which in turn lead to a complex circuit and are not in line with the development trend of miniaturization and intellectualization.
CN 112 436 576 A describes a wake-up circuit control method and apparatus, and an electronic device, relates to the technical field of charging control, and alleviates the technical problem of single wake-up method of a wake-up circuit during reservation charging. The method comprises the following steps: detecting a current charging mode of the wake-up circuit; if the charging mode is a gun insertion awakening mode, controlling the first awakening circuit to generate a first awakening signal according to the CP signal; and if the charging mode is a charging wake-up mode, controlling the second wake-up circuit to generate a second wake-up signal according to the CP signal.
CN 109 774 534 A discloses provides a charging wake-up circuit. The charging wake-up circuit is applicable to a new energy automobile battery management system. The charging wake-up circuit specifically and structurally includes a sleep unit and a wake-up unit, wherein an input end of the sleep unit is connected with power supply equipment, an output end of the sleep unit is connected with a control end of the wake-up unit, an input end of the wake-up unit is connected with a power supply, and an output end of the wake-up unit is connected with an automobile-mounted charger; the sleep unit is used for controlling the wake-up unit to wake up the automobile-mounted charger when a rising edge occurs in a received power transmission signal.
CN 210912 030 U relates to the technical field of circuits, and discloses a wake-up circuit and a rechargeable device. The wake-up circuit comprises an input control module, a driving module and an output control module. The input control module, the driving module and the output control module are respectively connected with the auxiliary power supply; the input control moduleis used for outputting a first level signal when receiving an external voltage signal; the driving module is used for outputting a second level signal lasting for a first preset duration when receiving the first level signal; and the output control module is used for outputting an awakening signal lasting for a first preset duration to the battery management system when receiving the second level signal.

### SUMMARY

The invention provides a wake-up circuit comprising: a switch unit comprising a switch Q1, wherein the switch Q1 includes a first terminal, a second terminal and a control terminal, and the second terminal of the switch Q1 is grounded; a switch control unit, wherein an input terminal of the switch control unit receives a CP signal, and an output terminal of the switch control unit is connected to the control terminal of the switch Q1, so that the switch Q1 is turned on or turned off based on the CP signal, and wherein when the CP signal is at a low level, the CP signal is transmitted through the switch control unit and a low level is output at an output terminal of the switch control unit, and wherein at the moment when the CP signal changes from a low level to a high level, the switch control unit transmits a high level CP signal to the control terminal of the switch Q1, and wherein when the CP signal is at a long-time high level, the long-time high level CP signal is transmitted through the switch control unit and a low level is output at the output terminal of the switch control unit; a first capacitor C1, wherein a first terminal of the first capacitor C1 is connected to the first terminal of the switch Q1, and a second terminal of the first capacitor C1 outputs a wake-up signal; a capacitor charging resistor unit, wherein a first terminal of the capacitor charging resistor unit is connected to the second terminal of the first capacitor C1, and the second terminal of the capacitor charging resistor unit is connected to an auxiliary power supply Vaux, and wherein when the switch Q1 is turned on, the auxiliary power supply Vaux is charging the first capacitor C1 through the capacitor charging resistor unit; and a capacitor discharging branch, wherein both terminals of the capacitor discharging branch are connected to both terminals of the first capacitor C1, and a resistance value of the capacitor discharging branch is much larger than a resistance value of the capacitor charging resistor unit.

Further, when a wake-up mode is a plug-in gun wake-up mode, the CP signal changes from a low level to a high level. When the CP signal is at a low level, a voltage on the first capacitor C1 is 0V, and the low level CP signal is transmitted through the switch control unit and a low level is output at the output terminal of the switch control unit, making the switch Q1 turn off and a wake-up signal be pulled up to a high level. At the moment when the signal changes from a low level to a high level, the switch control unit transmits the high level CP signal to the control terminal of the switch Q1, making the switch Q1 turn on and the wake-up signal be pulled down, and generating a falling-edge wake-up signal. When the CP signal continues to be a high level, the long-time high level CP signal is transmitted through the switch control unit, and a low level is output at the output terminal of the switch control unit, making the switch Q1 turn off, the wake-up signal being continued to be pulled up to a high level and maintaining as a high level.

When the wake-up mode is a reservation charging mode, the CP signal changes from a low level to a PWM wave. When the CP signal is at a low level, a voltage on the first capacitor C1 is 0V, and the low level CP signal is transmitted through the switch control unit and a low level is output at the output terminal of the switch control unit, making the switch Q1 turn off and a wake-up signal be pulled up to a high level. At the moment when the signal changes from a low level to a high level, the switch control unit transmits the high level CP signal to the control terminal of the switch Q1, making the switch Q1 turn on and the wake-up signal be pulled down, and generating a falling-edge wake-up signal. During the period of the high level of the CP signal, an auxiliary power supply Vaux charges the first capacitor C1 through the capacitor charging resistor unit and the turned-on switch Q1. When the CP signal changes from the high level of the PWM wave to a low level, the low level CP signal is transmitted through the switch control unit and a low level is output at the output terminal of the switch control unit, making the switch Q1 turn off and a wake-up signal be pulled up to a high level, and the energy in the first capacitor C1 being discharged through the capacitor discharging branch. The first capacitor C1 is continued to be charged at the next high level of the PWM wave of the CP signal, and since a resistance value of the capacitor discharging branch is much larger than a resistance value of the capacitor charging resistor unit, a discharging time of the first capacitor C1 is much larger than a charging time, making the first capacitor C1 be gradually filled and the wake-up signal be held at the high level.

When the wake-up mode is a plug-in gun reservation charging mode, the CP signal changes from a high level to a PWM wave. When the CP signal is a long-time high level, the long-time high level CP signal is transmitted through the switch control unit, and a low level is output at the output terminal of the switch control unit, making the switch Q1 turn off, and the wake-up signal being pulled up to a high level. When the CP signal changes from the high level to a low level, the low level CP signal is transmitted through the switch control unit and a low level is output at the output terminal of the switch control unit, making the switch Q1 turn off and a wake-up signal be pulled up to a high level. At the moment when the signal changes from a low level to a high level, the switch control unit transmits the high level CP signal to the control terminal of the switch Q1, making the switch Q1 turn on and the wake-up signal be pulled down, and generating a falling-edge wake-up signal. During the period of the high level of the CP signal, an auxiliary power supply Vaux charges the first capacitor C1 through the capacitor charging resistor unit and the turned-on switch Q1. When the CP signal changes from the high level of the PWM wave to a low level, the low level CP signal is transmitted through the switch control unit and a low level is output at the output terminal of the switch control unit, making the switch Q1 turn off and a wake-up signal be pulled up to a high level, and the energy in the first capacitor C1 being discharged through the capacitor discharging branch. The first capacitor C1 is continued to be charged at the next high level of the PWM wave of the CP signal, and since a resistance value of the capacitor discharging branch is much larger than a resistance value of the capacitor charging resistor unit, a discharging time of the first capacitor C1 is much larger than a charging time, making the first capacitor C1 be gradually filled and the wake-up signal be held at the high level.

Further, the switch control unit comprises a second capacitor C2, a third capacitor C3, a first resistor unit and a diode D3, and wherein a first terminal of the first resistor unit is an input terminal of the switch control unit for receiving the CP signal, a second terminal of the first resistor unit is connected to a first terminal of the second capacitor C2, a second terminal of the second capacitor C2 is connected to a control terminal of the switch Q1, a first terminal of the third capacitor C3 is connected to the control terminal of the switch Q1, a second terminal of the third capacitor C3 is grounded, an anode of the diode D3 is grounded, a cathode of the diode D3 is connected to the second terminal of the second capacitor C2, and the second terminal of the second capacitor C2 forms an output terminal of the switch control unit.

Further, when the CP signal is at the low level, the voltage on the second capacitor C2 and the third capacitor C3 in the switch control unit are both 0V, the output terminal of the switch control unit outputs the low level. At the moment when the CP signal changes from the low level to the high level, the second capacitor C2 is short circuited, and the switch control unit transmits the high level CP signal to the control terminal of the switch Q1. When the CP signal is the long-time high level, a voltage on the third capacitor C3 is 0V due to a DC blocking effect of the second capacitor C2, and the output terminal of the switch control unit outputs a low level. When the CP signal is the low level, the energy on the third capacitor C3 is discharged through a discharging circuit formed by the second capacitor C2 and the first resistor unit, and the energy on the second capacitor C2 is discharged through the discharging circuit formed by the first resistor unit and the diode D3.

Further, the switch control unit further comprises a second resistor unit connected between the first terminal of the first resistor unit and the ground.

Further, the switch control unit further comprises a diode D2, an anode of the diode D2 being connected to the second terminal of the first resistor unit, and a cathode of the diode D2 being connected to the first terminal of the first resistor unit.

Further, the wake-up circuit comprises a diode D1, an anode of the diode D1 receiving a CP signal, and a cathode of the diode D1 being connected to the first terminal of the first resistor unit.

Further, the capacitor discharging branch comprises a discharging resistor unit and a diode D4, a first terminal of the discharging resistor unit being connected to the first terminal of the first capacitor C1, a second terminal of the discharging resistor unit being connected to a cathode of the diode D4, and an anode of the diode D4 being connected to the second terminal of the first capacitor C1.

Further, the cathode of the diode D4 is further connected to the auxiliary power supply Vaux.

The present invention further provides an electronic device comprising the above wake-up circuit.

### BRIEF DESCRIPTION OF THE DRAWINGS

FIG. 1 shows a schematic diagram of a wake-up circuit according to an embodiment of the present invention.
FIG. 2a shows a CP signal waveform according to an embodiment.
FIG. 2b shows a CP signal waveform according to an embodiment.
FIG. 2c shows a CP signal waveform according to an embodiment.
FIG. 3 shows a schematic diagram of a wake-up circuit according to another embodiment of the present invention.

### DETAILED DESCRIPTION OF ILLUSTRATIVE EMBODIMENTS

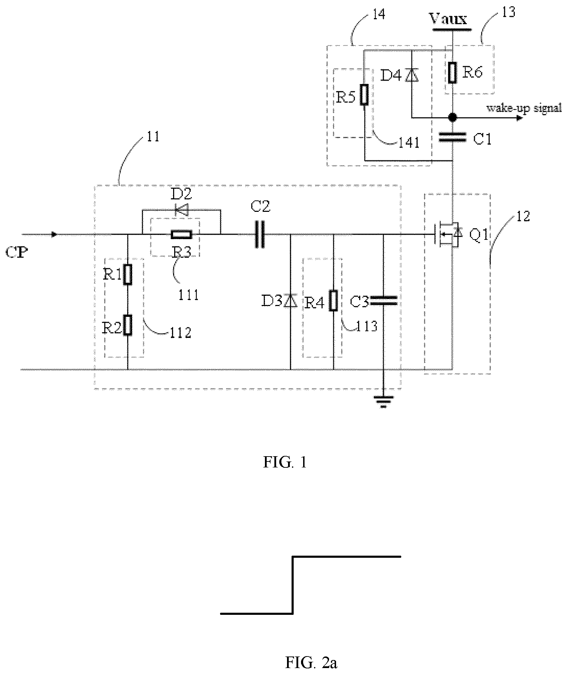

In one embodiment of the present invention, a wake-up circuit is provided. Specifically, please refer to a schematic diagram of a wake-up circuit according to an embodiment of the present invention shown in FIG. 1. The wake-up circuit in the present application comprises:
a switch unit 12 comprising a switch Q1, wherein the switch Q1 includes a first terminal, a second terminal and a control terminal, and the second terminal of the switch Q1 is grounded;
a switch control unit 11, wherein an input terminal of the switch control unit 11 receives a CP signal, and an output terminal of the switch control unit 11 is connected to the control terminal of the switch Q1, so that the switch Q1 is turned on or turned off based on the CP signal, and wherein when the CP signal is at a low level, the CP signal is transmitted through the switch control unit 11 and a low level is output at an output terminal of the switch control unit 11, and wherein at the moment when the CP signal changes from a low level to a high level, the switch control unit 11 transmits a high level CP signal to the control terminal of the switch Q1, and wherein when the CP signal is at a long-time high level, the long-time high level CP signal is transmitted through the switch control unit 11 and a low level is output at the output terminal of the switch control unit;
a first capacitor C1, wherein a first terminal of the first capacitor C1 is connected to the first terminal of the switch Q1, and a second terminal of the first capacitor C1 outputs a wake-up signal;
a capacitor charging resistor unit 13, wherein a first terminal of the capacitor charging resistor unit 13 is connected to the second terminal of the first capacitor C1, and the second terminal of the capacitor charging resistor unit 13 is connected to an auxiliary power supply Vaux, and wherein when the switch Q1 is turned on, the auxiliary power supply Vaux is charging the first capacitor C1 through the capacitor charging resistor unit 13; and
a capacitor discharging branch 14, wherein both terminals of the capacitor discharging branch 14 are connected to both terminals of the first capacitor C1, and a resistance value of the capacitor discharging branch 14 is much larger than a resistance value of the capacitor charging resistor unit 13.

Specifically, when a wake-up mode is a plug-in gun wake-up mode, the CP signal changes from a low level to a high level. Please refer to a CP signal waveform according to an embodiment shown in FIG. 2a.When the CP signal is at a low level, a voltage on the first capacitor C1 is 0V, and the low level CP signal is transmitted through the switch control unit 11 and a low level is output at the output terminal of the switch control unit 11, making the switch Q1 turn off and a wake-up signal be pulled up to a high level. At the moment when the CP signal changes from a low level to a high level, the switch control unit 11 transmits the high level CP signal to the control terminal of the switch Q1, making the switch Q1 turn on and the wake-up signal be pulled down, and generating a falling-edge wake-up signal. When the CP signal continues to be a high level, the long-time high level CP signal is transmitted through the switch control unit 11, and a low level is output at the output terminal of the switch control unit 11, making the switch Q1 turn off, the wake-up signal being continued to be pulled up to a high level and maintaining as a high level. As such, when a wake-up mode is a plug-in gun wake-up mode, only a falling-edge wake-up signal is generated.

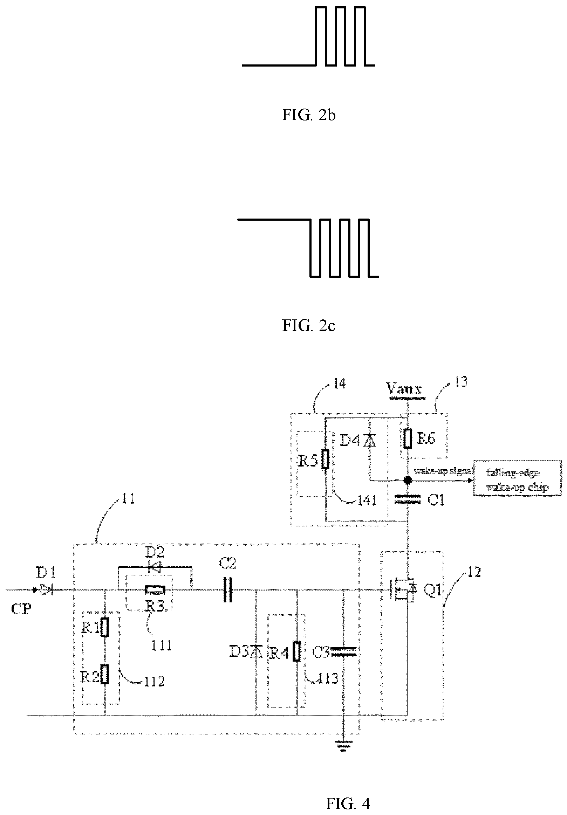

When the wake-up mode is a reservation charging mode, the CP signal changes from a low level to a PWM wave. Please refer to a CP signal waveform according to an embodiment shown in FIG. 2b. When the CP signal is a low level and at the moment when the CP signal changes from a low level to a high level, the wake-up circuit operates in the same mode as the plug-in gun wake-up mode, which will not be repeated here. Then during the period of the high level of the CP signal, an auxiliary power supply Vaux charges the first capacitor C1 through the capacitor charging resistor unit 13 and the turned-on switch Q1. When the CP signal changes from the high level of the PWM wave to a low level, the low level CP signal is transmitted through the switch control unit 11 and a low level is output at the output terminal of the switch control unit 11, making the switch Q1 turn off and a wake-up signal be pulled up to a high level, and the energy in the first capacitor C1 being discharged through the capacitor discharging branch 14. The first capacitor C1 is continued to be charged at the next high level of the PWM wave of the CP signal, and since a resistance value of the capacitor discharging branch 14 is much larger than a resistance value of the capacitor charging resistor unit 13, a discharging time of the first capacitor C1 is much larger than a charging time, making the first capacitor C1 be gradually filled and the wake-up signal be held at the high level. As such, when a wake-up mode is a reservation charging mode, only a falling-edge wake-up signal is generated.

When the wake-up mode is a plug-in gun reservation charging mode, the CP signal changes from a high level to a PWM wave. Please refer to a CP signal waveform according to an embodiment shown in FIG. 2c, the CP signal is initially at a high level (long-time high level). When the CP signal is a long-time high level, the long-time high level CP signal is transmitted through the switch control unit 11, and a low level is output at the output terminal of the switch control unit 11, making the switch Q1 turn off, and the wake-up signal being pulled up to a high level. When the CP signal changes from the high level to a low level, the low level CP signal is transmitted through the switch control unit 11 and a low level is output at the output terminal of the switch control unit 11, making the switch Q1 turn off and a wake-up signal be pulled up to a high level. Then the signal changes from a low level to a high level. At the moment when the CP signal changes from a low level to a high level and during the subsequent period of PWM wave of the CP signal, the wake-up circuit operates in the same mode as the reservation charging mode, which will not be repeated here.

Specifically, referring to FIG. 1, the switch control unit 11 comprises a second capacitor C2, a third capacitor C3, a first resistor unit 111 and a diode D3, and wherein a first terminal of the first resistor unit 111 is an input terminal of the switch control unit 11 for receiving the CP signal, a second terminal of the first resistor unit 111 is connected to a first terminal of the second capacitor C2, a second terminal of the second capacitor C2 is connected to a control terminal of the switch Q1, a first terminal of the third capacitor C3 is connected to the control terminal of the switch Q1, a second terminal of the third capacitor C3 is grounded, an anode of the diode D3 is grounded, a cathode of the diode D3 is connected to the second terminal of the second capacitor C2, and the second terminal of the second capacitor C2 forms an output terminal of the switch control unit. When the CP signal is at the low level, the voltage on the second capacitor C2 and the third capacitor C3 in the switch control unit 11 are both 0V, the output terminal of the switch control unit 11 outputs the low level. At the moment when the CP signal changes from the low level to the high level, the second capacitor C2 is short circuited, and the switch control unit transmits the high level CP signal to the control terminal of the switch Q1. When the CP signal is the long-time high level, a voltage on the third capacitor C3 is 0V due to a DC blocking effect of the second capacitor C2, and the output terminal of the switch control unit 11 outputs a low level. That is, when the CP signal is the long-time high level, the long-time high level is transmitted through the switch control unit 11 and a low level is output in the output terminal of the switch control unit 11. When the CP signal is the low level, the energy on the third capacitor C3 is discharged through a discharging circuit formed by the second capacitor C2 and the first resistor unit 111, and the energy on the second capacitor C2 is discharged through the discharging circuit formed by the first resistor unit 111 and the diode D3.

Further, referring to FIG. 1, the switch control unit 11 further comprises a second resistor unit 112 connected between the first terminal of the first resistor unit 111 and the ground. When the CP signal is a low level, the energy on the third capacitor C3 is discharged through a discharging circuit formed by the second capacitor C2, the first resistor unit 111 and the second resistor unit 112, and the energy on the second capacitor C2 is discharged through the discharging circuit formed by the first resistor unit 111, the second resistor unit 112 and the diode D3.

Further, referring to FIG. 1, the switch control unit 11 further comprises a diode D2, an anode of the diode D2 being connected to the second terminal of the first resistor unit 111, and a cathode of the diode D2 being connected to the first terminal of the first resistor unit 111. When the CP signal is a low level, the discharging circuit discharging the energy in the capacitor C3 and capacitor C2 includes diode D2. That is, the conductive diode D2 makes the first resistor unit 111 be short circuited, which improves the discharging speed.

Further, please refer to a schematic diagram of a wake-up circuit according to another embodiment of the present invention shown in FIG. 3. The wake-up circuit comprises a diode D1, an anode of the diode D1 receiving a CP signal, and a cathode of the diode D1 being connected to the first terminal of the first resistor unit 111. Since the input of the CP signal of the wake-up circuit of the present application is connected to the CP terminal of the whole vehicle, the diode D1 can ensure that the wake-up circuit of the present application is unidirectional, while ensuring that the internal circuit of the wake-up circuit of the present application will not affect the external circuit when the internal circuit has a problem, and improving the reliability of the whole vehicle.

In an embodiment, the third capacitor C3 can be a parasitic capacitor of the switch Q1 or an external connected capacitor.

In an embodiment, the switch control unit 11 further comprises a third resistor unit 113, the third resistor unit 113 being connected between a control terminal of the switch Q1 and the ground for preventing the switch Q1 from mis-conducting.

In an embodiment, as shown in FIG. 1, the capacitor discharging branch 14 includes a discharging resistor unit 141 and a diode D4. A first terminal of the discharging resistor unit 141 is connected to a first terminal of the first capacitor C1. A second terminal of the discharging resistor unit 141 is connected to a cathode of the diode D4, and an anode of the diode D4 is connected to a second terminal of the first capacitor C1. Specifically, the resistance value of the discharging resistor unit 141 is much larger than the resistance value of the capacitor charging resistor unit 13. Further, the cathode of the diode D4 is also connected to the auxiliary power supply Vaux. Specifically, the cathode of the diode D4 is connected to the auxiliary power supply Vaux, which ensures that the diode D4 does not conduct when the switch Q1 conducts for charging the first capacitor C1 and reduces the loss. Otherwise, a portion of the current will flow through the diode D4 and the discharging resistor unit 141, which increases loss of the device.

In an embodiment, the auxiliary power supply Vaux provides a voltage value of 12V, but obviously it can be other suitable voltage values, which are not limited herein.

In an embodiment, the switch Q1 is a metal-oxide-semiconductor field effect transistor (MOSFET), wherein a first terminal is a drain D, a second terminal is a source S, and a control terminal is a gate G.

The above-described "long-time high level", "long-time low level", "continue to be a high level", or "continue to be a low level" in the CP signal means that the level is maintained for a longer time than the time of the high level or the low level in the PWM wave in the CP signal. In an embodiment, the level is held for more than 1 ms.

In one embodiment, the resistance value of the discharging resistor unit 141 described above is much larger than the resistance value of the capacitor charging resistor unit 13. Or, "much larger" in the case where the resistance value of the capacitor discharging branch 14 is much larger than the resistance value of the capacitor charging resistor unit 13 means more than 20 times larger.

Any of the resistor units described above can include only one resistor. As shown in FIG. 1, the capacitor charging resistor unit 13 includes only one resistor R6, the discharging resistor unit 141 includes only one resistor R5, and the first resistor unit 111 includes only one resistor R3. However, it can also be a series and/or a parallel connection of a plurality of resistors. As shown in FIG. 1, the second resistor unit 112 is formed by resistor R1 and resistor R2 connecting in series.

For the wake-up circuit as shown in FIG. 1, when a wake-up mode is a plug-in gun wake-up mode, the CP signal changes from a low level to a high level. As shown in FIG. 2a, when the CP signal is initially a low level (long-time low level), the voltages on the second capacitor C2, the third capacitor C3 of the switch control unit 11 and the first capacitor C1 are all 0V and a low level is output at the output terminal of the switch control unit 11, making the switch Q1 turn off and a wake-up signal be pulled up to a high level. At the moment when the signal changes from a low level to a high level, the second capacitor C2 is short circuited and the switch control unit 11 transmits the high level CP signal to the control terminal of the switch Q1, making the switch Q1 turn on and the wake-up signal be pulled down, and generating a falling-edge wake-up signal. When the CP signal continues to be a high level, the voltage on the third capacitor C3 is 0V due to a DC blocking effect of the second capacitor C2, and a low level is output at the output terminal of the switch control unit 11, making the switch Q1 turn off, the wake-up signal being pulled up to a high level and maintaining as a high level. As such, when a wake-up mode is a plug-in gun wake-up mode, only a falling-edge wake-up signal is generated. When the wake-up mode is a reservation charging mode, the CP signal changes from a low level to a PWM wave. As shown in FIG. 2b, when the CP signal is a low level and at the moment when the CP signal changes from a low level to a high level, the wake-up circuit operates in the same mode as the plug-in gun wake-up mode, which will not be repeated here. Then during the period of the high level of the CP signal, the second capacitor C2 and the third capacitor C3 are charged by the high level CP signal and the first capacitor C1 is charged by an auxiliary power supply Vaux through the capacitor charging resistor unit 13 and the turned-on switch Q1. When the CP signal changes from the high level of the PWM wave to a low level, the energy in the third capacitor C3 is discharged by the second capacitor C2 and the first resistor unit 111 and the energy in the second capacitor C2 is discharged by the first resistor unit 111 and the diode D3, making the switch Q1 turn off and a wake-up signal be pulled up to a high level. The energy in the first capacitor C1 is discharged through the discharging resistor unit 141 and the diode D4. The first capacitor C1 is continued to be charged at the next high level of the PWM wave of the CP signal, and since a resistance value of the discharging resistor unit 141 is much larger than a resistance value of the capacitor charging resistor unit 13, a discharging time of the first capacitor C1 is much larger than a charging time, making the first capacitor C1 be gradually filled and the wake-up signal be held at the high level. As such, when a wake-up mode is a reservation charging mode, only one falling-edge wake-up signal is generated and no wake-up signal in the form of PWM wave is generated based on the PWM wave of CP signal, ensuring that a falling-edge wake-up chip receiving the wake-up signal can operate properly. When the wake-up mode is a plug-in gun reservation charging mode, the CP signal changes from a high level to a PWM wave. As shown in FIG. 2c, when the CP signal is initially at a high level (long-time high level), the voltage on the third capacitor C3 is 0V due to a DC blocking effect of the second capacitor C2, and a low level is output at the output terminal of the switch control unit 11, making the switch Q1 turn off, the wake-up signal being pulled up to a high level. When the CP signal changes from the high level to a low level of PWM wave, the second capacitor C2, the third capacitor C3 of the switch control unit 11 and the first capacitor C1 are all 0V and a low level is output at the output terminal of the switch control unit 11, making the switch Q1 turn off and a wake-up signal be pulled up to a high level. Then CP signal changes from the low level of PWM wave to the high level and continues to be a PWM wave. At the moment when the CP signal changes from a low level to a high level and during the subsequent period of PWM wave of the CP signal, the wake-up circuit operates in the same mode as the reservation charging mode, which will not be repeated here. As such, when a wake-up mode is a plug-in gun reservation charging mode, only one falling-edge wake-up signal is generated and no wake-up signal in the form of PWM wave is generated based on the PWM wave of CP signal, ensuring that a falling-edge wake-up chip receiving the wake-up signal can operate properly.

As such, the wake-up circuit of the present application not only meets the requirement of multiple wake-up methods of the electric vehicle and solves the problem of a single wake-up method, but also is compatible with multiple wake-up methods of the electric vehicle by only one wake-up circuit. The circuit has a simple structure, a small loss, and is controlled easily.

In an embodiment of the present application, there is also provided an electronic device comprising the above-described wake-up circuit.

Finally, it should be noted that the above embodiments are only used to illustrate the technical solution of the present invention rather than limitation thereof. Although the present invention has been described in detail with reference to the foregoing embodiments, it will be appreciated by those of ordinary skill in the art that the technical solutions described in the foregoing embodiments can still be modified or part or all of the technical features thereof can be equivalently replaced; and these modifications or replacements do not make the essence of the corresponding technical solution deviate from the scope of the technical solution of each embodiment of the present invention.

## Claims

1. A wake-up circuit, comprising:
a switch unit (12) comprising a switch (Q1), wherein the switch (Q1) includes a first terminal, a second terminal and a control terminal, and the second terminal of the switch (Q1) is grounded;
a switch control unit (11), wherein an input terminal of the switch control unit (11) is configured to receive a charging pile, CP,
signal, and an output terminal of the switch control unit (11) is connected to the control terminal of the switch (Q1), so that the switch (Q1) is turned on or turned off based on the CP signal, and wherein when the CP signal is at a low level, the CP signal is transmitted through the switch control unit (11) and a low level is output at an output terminal of the switch control unit (11), and wherein at the moment when the CP signal changes from a low level to a high level, the switch control unit (11) is configured to transmit a high level CP signal to the control terminal of the switch (Q1), and wherein when the CP signal is at a long-time high level, the long-time high level CP signal is transmitted through the switch control unit (11) and a low level is output at the output terminal of the switch control unit (11);
a first capacitor (C1), wherein a first terminal of the first capacitor (C1) is connected to the first terminal of the switch (Q1), and a second terminal of the first capacitor (C1) is configured to output a wake-up signal;
a capacitor charging resistor unit, wherein a first terminal of the capacitor charging resistor unit is connected to the second terminal of the first capacitor (C1), and the second terminal of the capacitor charging resistor unit is connected to an auxiliary power supply (Vaux), and wherein when the switch (Q1) is turned on, the auxiliary power supply (Vaux) is charging the first capacitor (C1) through the capacitor charging resistor unit; and
a capacitor discharging branch (14), wherein both terminals of the capacitor discharging branch (14) are connected to both terminals of the first capacitor (C1), and a resistance value of the capacitor discharging branch (14) is much larger than a resistance value of the capacitor charging resistor unit,
wherein the CP signal is configured to change from a low level to a high level when the wake-up mode is a plug-in gun wake-up mode, is further configured to change from a low level to a PWM wave when the wake-up mode is a reservation charging mode and is further configured to change from a high level to a PWM wave when the wake-up mode is a plug-in reservation charging mode.

2. The wake-up circuit according to claim 1, wherein:
As for the plug-in gun wake-up mode, when the CP signal is at a low level, a voltage on the first capacitor (C1) is 0V, and the low level CP signal is transmitted through the switch control unit (11) and a low level is output at the output terminal of the switch control unit (11), making the switch (Q1) turn off and a wake-up signal be pulled up to a high level, and wherein at the moment when the signal changes from a low level to a high level, the switch control unit (11) is configured to transmit the high level CP signal to the control terminal of the switch (Q1), making the switch (Q1) turn on and the wake-up signal be pulled down, and generating a falling-edge wake-up signal, and wherein when the CP signal continues to be a high level, the long-time high level CP signal is transmitted through the switch control unit (11), and a low level is output at the output terminal of the switch control unit (11), making the switch (Q1) turn off, the wake-up signal being continued to be pulled up to a high level and maintaining as a high level;
As for the reservation charging mode, when the CP signal is at a low level, a voltage on the first capacitor (C1) is 0V, and the low level CP signal is transmitted through the switch control unit (11) and a low level is output at the output terminal of the switch control unit (11), making the switch (Q1) turn off and a wake-up signal be pulled up to a high level, and wherein at the moment when the signal changes from a low level to a high level, the switch control unit (11) is configured to transmit the high level CP signal to the control terminal of the switch (Q1), making the switch (Q1) turn on and the wake-up signal be pulled down, and generating a falling-edge wake-up signal, and wherein during the period of the high level of the CP signal, an auxiliary power supply (Vaux) is configured to charge the first capacitor (C1) through the capacitor charging resistor unit and the turned on switch (Q1), and wherein when the CP signal changes from the high level of the PWM wave to a low level, the low level CP signal is transmitted through the switch control unit (11) and a low level is output at the output terminal of the switch control unit (11), making the switch (Q1) turn off and a wake-up signal be pulled up to a high level, and the energy in the first capacitor (C1) being discharged through the capacitor discharging branch (14), and wherein the first capacitor (C1) is continued to be charged at the next high level of the PWM wave of the CP signal, and since a resistance value of the capacitor discharging branch (14) is much larger than a resistance value of the capacitor charging resistor unit, a discharging time of the first capacitor (C1) is much larger than a charging time, making the first capacitor (C1) be gradually filled and the wake-up signal be held at the high level; and
As for the plug-in gun reservation charging mode, when the CP signal is a long-time high level, the long-time high level CP signal is transmitted through the switch control unit (11), and a low level is output at the output terminal of the switch control unit (11), making the switch (Q1) turn off, and the wake-up signal being pulled up to a high level, and wherein when the CP signal changes from the high level to a low level, the low level CP signal is transmitted through the switch control unit (11) and a low level is output at the output terminal of the switch control unit (11), making the switch (Q1) turn off and a wake-up signal be pulled up to a high level, and wherein at the moment when the signal changes from a low level to a high level, the switch control unit (11) is configured to transmit the high level CP signal to the control terminal of the switch (Q1), making the switch (Q1) turn on and the wake-up signal be pulled down, and generating a falling-edge wake-up signal, and wherein during the period of the high level of the CP signal, an auxiliary power supply (Vaux) is configured to charge the first capacitor (C1) through the capacitor charging resistor unit and the turned on switch (Q1), and wherein when the CP signal changes from the high level of the PWM wave to a low level, the low level CP signal is transmitted through the switch control unit (11) and a low level is output at the output terminal of the switch control unit (11), making the switch (Q1) turn off and a wake-up signal be pulled up to a high level, and the energy in the first capacitor (C1) being discharged through the capacitor discharging branch (14), and wherein the first capacitor (C1) is continued to be charged at the next high level of the PWM wave of the CP signal, and since a resistance value of the capacitor discharging branch (14) is much larger than a resistance value of the capacitor charging resistor unit, a discharging time of the first capacitor (C1) is much larger than a charging time, making the first capacitor (C1) be gradually filled and the wake-up signal be held at the high level.

3. The wake-up circuit according to claim 2, wherein:
the switch control unit (11) comprises a second capacitor (C2), a third capacitor (C3), a first resistor unit (111) and a third diode (D3), and wherein a first terminal of the first resistor unit (111) is an input terminal of the switch control unit (11) configured to receive the CP signal, a second terminal of the first resistor unit (111) is connected to a first terminal of the second capacitor (C2), a second terminal of the second capacitor (C2) is connected to a control terminal of the switch (Q1), a first terminal of the third capacitor (C3) is connected to the control terminal of the switch (Q1), a second terminal of the third capacitor (C3) is grounded, an anode of the third diode (D3) is grounded, a cathode of the third diode (D3) is connected to the second terminal of the second capacitor (C2), and the second terminal of the second capacitor (C2) is configured to form an output terminal of the switch control unit (11).

4. The wake-up circuit according to claim 3, wherein:
when the CP signal is at the low level, the voltage on the second capacitor (C2) and the third capacitor (C3) in the switch control unit (11) are both 0V, the output terminal of the switch control unit (11) is configured to output the low level, and wherein at the moment when the CP signal changes from the low level to the high level, the second capacitor (C2) is short circuited, and the switch control unit (11) is configured to transmit the high level CP signal to the control terminal of the switch (Q1); and wherein when the CP signal is the long-time high level, a voltage on the third capacitor (C3) is 0V due to a DC blocking effect of the second capacitor (C2), and the output terminal of the switch control unit (11) is configured to output a low level, and wherein when the CP signal is the low level, the energy on the third capacitor (C3) is discharged through a discharging circuit formed by the second capacitor (C2) and the first resistor unit (111), and the energy on the second capacitor (C2) is discharged through the discharging circuit formed by the first resistor unit (111) and the third diode (D3).

5. The wake-up circuit according to claim 3, wherein:
the switch control unit (11) further comprises a second resistor unit (112) connected between the first terminal of the first resistor unit (111) and the ground.

6. The wake-up circuit according to claim 3 or claim 5, wherein:
the switch control unit (11) further comprises a second diode (D2), an anode of the second diode (D2) being connected to the second terminal of the first resistor unit (111), and a cathode of the second diode (D2) being connected to the first terminal of the first resistor unit (111).

7. The wake-up circuit according to claim 1, further comprising:
a first diode (D1), an anode of the first diode (D1) configured to receive a CP signal, and a cathode of the first diode (D1) being connected to the first terminal of the first resistor unit (111).

8. The wake-up circuit according to claim 1, wherein:
the capacitor discharging branch (14) comprises a discharging resistor unit (141) and a fourth diode (D4), a first terminal of the discharging resistor unit (141) being connected to the first terminal of the first capacitor (C1), a second terminal of the discharging resistor unit (141) being connected to a cathode of the fourth diode (D4), and an anode of the fourth diode (D4) being connected to the second terminal of the first capacitor (C1).

9. The wake-up circuit according to claim 8, wherein:
the cathode of the fourth diode (D4) is further connected to the auxiliary power supply (Vaux).

10. An electronic device, comprising:
a wake-up circuit according to any one of claims 1 to 9.

## Patentansprüche

1. Wake-up-Schaltung, umfassend:
eine Schalteinheit (12), die einen Schalter (Q1) umfasst, wobei der Schalter (Q1) einen ersten Anschluss, einen zweiten Anschluss und einen Steueranschluss enthält, und wobei der zweite Anschluss des Schalters (Q1) geerdet ist;
eine Schaltersteuereinheit (11), wobei ein Eingangsanschluss der Schaltersteuereinheit (11) dazu eingerichtet ist, ein Control-Pilot-Signal (CP-Signal) zu empfangen, wobei ein Ausgangsanschluss der Schaltersteuereinheit (11) mit dem Steueranschluss des Schalters (Q1) verbunden ist, so dass der Schalter (Q1) abhängig vom CP-Signal ein- oder ausgeschaltet wird, wobei wenn das CP-Signal auf einem niedrigen Pegel ist, das CP-Signal durch die Schaltersteuereinheit (11) übertragen wird, wobei an einem Ausgangsanschluss der Schaltersteuereinheit (11) ein niedriger Pegel ausgegeben wird, wobei zum Zeitpunkt, zu dem das CP-Signal von einem niedrigen Pegel zu einem hohen Pegel wechselt, die Schaltersteuereinheit (11) dazu eingerichtet ist, ein CP-Signal mit hohem Pegel an den Steueranschluss des Schalters (Q1) zu übertragen, und wobei wenn das CP-Signal über längere Zeit auf hohem Pegel ist, das CP-Signal mit langanhaltendem hohem Pegel durch die Schaltersteuereinheit (11) übertragen und am Ausgangsanschluss der Schaltersteuereinheit (11) ein niedriger Pegel ausgegeben wird;
einen ersten Kondensator (C1), wobei ein erster Anschluss des ersten Kondensators (C1) mit dem ersten Anschluss des Schalters (Q1) verbunden ist, wobei ein zweiter Anschluss des ersten Kondensators (C1) dazu eingerichtet ist, ein Wake-up-Signal auszugeben;
eine Kondensator-Lade-Widerstandseinheit, wobei ein erster Anschluss der Kondensator-Lade-Widerstandseinheit mit dem zweiten Anschluss des ersten Kondensators (C1) verbunden ist, wobei der zweite Anschluss der Kondensator-Lade-Widerstandseinheit mit einer Hilfsspannungsquelle (Vaux) verbunden ist, und wobei wenn der Schalter (Q1) eingeschaltet ist, die Hilfsspannungsquelle (Vaux) den ersten Kondensator (C1) über die Kondensator-Lade-Widerstandseinheit lädt; und
einen Kondensator-Entladezweig (14), wobei beide Anschlüsse des Kondensator-Entladezweigs (14) mit beiden Anschlüssen des ersten Kondensators (C1) verbunden sind und ein Widerstandswert des Kondensator-Entladezweigs (14) deutlich größer als ein Widerstandswert der Kondensator-Lade-Widerstandseinheit ist, wobei das CP-Signal dazu eingerichtet ist, von einem niedrigen Pegel auf einen hohen Pegel zu wechseln, wenn der Wake-up-Modus ein Plug-in-Gun-Wake-up-Modus ist, wobei es ferner dazu eingerichtet ist, von einem niedrigen Pegel auf eine PWM-Welle zu wechseln, wenn der Wake-up-Modus ein Reservierungs-Lademodus ist, wobei es ferner dazu eingerichtet ist, von einem hohen Pegel auf eine PWM-Welle zu wechseln, wenn der Wake-up-Modus ein Plug-in-Reservierungs-Lademodus ist.

2. Wake-up-Schaltung nach Anspruch 1, wobei
für den Plug-in-Gun-Wake-up-Modus, wenn das CP-Signal auf niedrigem Pegel ist, eine Spannung auf dem ersten Kondensator (C1) 0 V beträgt, wobei das CP-Signal mit niedrigem Pegel durch die Schaltersteuereinheit (11) übertragen und am Ausgangsanschluss der Schaltersteuereinheit (11) ein niedriger Pegel ausgegeben wird, so dass der Schalter (Q1) ausgeschaltet und das Wake-up-Signal auf einen hohen Pegel gezogen wird, und wobei zum Zeitpunkt, zu dem das Signal von einem niedrigen Pegel zu einem hohen Pegel wechselt, die Schaltersteuereinheit (11) dazu eingerichtet ist, das CP-Signal mit hohem Pegel an den Steueranschluss des Schalters (Q1) zu übertragen, so dass der Schalter (Q1) eingeschaltet und das Wake-up-Signal nach unten gezogen wird, wobei ein Wake-up-Signal mit fallender Flanke erzeugt wird, und wobei wenn das CP-Signal weiterhin auf hohem Pegel ist, das CP-Signal mit langanhaltendem hohem Pegel durch die Schaltersteuereinheit (11) übertragen wird, wobei am Ausgangsanschluss der Schaltersteuereinheit (11) ein niedriger Pegel ausgegeben wird, so dass der Schalter (Q1) ausgeschaltet und das Wake-up-Signal weiterhin auf einen hohen Pegel gezogen und auf hohem Pegel gehalten wird,
wobei für den Reservierungs-Lademodus, wenn das CP-Signal auf niedrigem Pegel ist, eine Spannung auf dem ersten Kondensator (C1) 0 V beträgt, wobei das CP-Signal mit niedrigem Pegel durch die Schaltersteuereinheit (11) übertragen und am Ausgangsanschluss der Schaltersteuereinheit (11) ein niedriger Pegel ausgegeben wird, so dass der Schalter (Q1) ausgeschaltet und das Wake-up-Signal auf einen hohen Pegel gezogen wird, wobei zum Zeitpunkt, zu dem das Signal von einem niedrigen Pegel zu einem hohen Pegel wechselt, die Schaltersteuereinheit (11) dazu eingerichtet ist, das CP-Signal mit hohem Pegel an den Steueranschluss des Schalters (Q1) zu übertragen, so dass der Schalter (Q1) eingeschaltet und das Wake-up-Signal nach unten gezogen wird, wobei ein Wake-up-Signal mit fallender Flanke erzeugt wird, wobei während des hohen Pegels des CP-Signals die Hilfsspannungsquelle (Vaux) dazu eingerichtet ist, den ersten Kondensator (C1) über die Kondensator-Lade-Widerstandseinheit und den eingeschalteten Schalter (Q1) zu laden, wobei wenn das CP-Signal vom hohen Pegel der PWM-Welle auf einen niedrigen Pegel wechselt, das CP-Signal mit niedrigem Pegel durch die Schaltersteuereinheit (11) übertragen und am Ausgangsanschluss der Schaltersteuereinheit (11) ein niedriger Pegel ausgegeben wird, so dass der Schalter (Q1) ausgeschaltet und das Wake-up-Signal auf einen hohen Pegel gezogen wird, wobei die Energie im ersten Kondensator (C1) über den Kondensator-Entladezweig (14) entladen wird, und wobei der erste Kondensator (C1) beim nächsten hohen Pegel der PWM-Welle des CP-Signals weiterhin geladen wird, wobei eine Entladezeit des ersten Kondensators (C1) deutlich größer als eine Ladezeit ist, da ein Widerstandswert des Kondensator-Entladezweigs (14) deutlich größer als ein Widerstandswert der Kondensator-Lade-Widerstandseinheit ist, so dass der erste Kondensator (C1) allmählich gefüllt und das Wake-up-Signal auf hohem Pegel gehalten wird, und
wobei für den Plug-in-Gun-Reservierungs-Lademodus, wenn das CP-Signal über längere Zeit auf hohem Pegel ist, das CP-Signal mit langanhaltendem hohem Pegel durch die Schaltersteuereinheit (11) übertragen und am Ausgangsanschluss der Schaltersteuereinheit (11) ein niedriger Pegel ausgegeben wird, so dass der Schalter (Q1) ausgeschaltet und das Wake-up-Signal auf einen hohen Pegel gezogen wird, wobei wenn das CP-Signal vom hohen zum niedrigen Pegel wechselt, das CP-Signal mit niedrigem Pegel durch die Schaltersteuereinheit (11) übertragen und am Ausgangsanschluss der Schaltersteuereinheit (11) ein niedriger Pegel ausgegeben wird, so dass der Schalter (Q1) ausgeschaltet und das Wake-up-Signal auf einen hohen Pegel gezogen wird, wobei zum Zeitpunkt, zu dem das Signal von einem niedrigen zu einem hohen Pegel wechselt, die Schaltersteuereinheit (11) dazu eingerichtet ist, das CP-Signal mit hohem Pegel an den Steueranschluss des Schalters (Q1) zu übertragen, so dass der Schalter (Q1) eingeschaltet und das Wake-up-Signal nach unten gezogen wird, wobei ein Wake-up-Signal mit fallender Flanke erzeugt wird, wobei während des hohen Pegels des CP-Signals die Hilfsspannungsquelle (Vaux) dazu eingerichtet ist, den ersten Kondensator (C1) über die Kondensator-Lade-Widerstandseinheit und den eingeschalteten Schalter (Q1) zu laden, wobei wenn das CP-Signal vom hohen Pegel der PWM-Welle auf einen niedrigen Pegel wechselt, das CP-Signal mit niedrigem Pegel durch die Schaltersteuereinheit (11) übertragen und am Ausgangsanschluss der Schaltersteuereinheit (11) ein niedriger Pegel ausgegeben wird, so dass der Schalter (Q1) ausgeschaltet und das Wake-up-Signal auf einen hohen Pegel gezogen wird, wobei die Energie im ersten Kondensator (C1) über den Kondensator-Entladezweig (14) entladen wird, und wobei der erste Kondensator (C1) beim nächsten hohen Pegel der PWM-Welle des CP-Signals weiterhin geladen wird, wobei eine Entladezeit des ersten Kondensators (C1) deutlich größer als eine Ladezeit ist, da ein Widerstandswert des Kondensator-Entladezweigs (14) deutlich größer als ein Widerstandswert der Kondensator-Lade-Widerstandseinheit ist, so dass der erste Kondensator (C1) allmählich gefüllt und das Wake-up-Signal auf hohem Pegel gehalten wird.

3. Wake-up-Schaltung nach Anspruch 2, wobei
die Schaltersteuereinheit (11) einen zweiten Kondensator (C2), einen dritten Kondensator (C3), eine erste Widerstandseinheit (111) und eine dritte Diode (D3) umfasst, und wobei ein erster Anschluss der ersten Widerstandseinheit (111) ein Eingangsanschluss der Schaltersteuereinheit (11) ist, der dazu eingerichtet ist, das CP-Signal zu empfangen, wobei ein zweiter Anschluss der ersten Widerstandseinheit (111) mit einem ersten Anschluss des zweiten Kondensators (C2) verbunden ist, wobei ein zweiter Anschluss des zweiten Kondensators (C2) mit einem Steueranschluss des Schalters (Q1) verbunden ist, wobei ein erster Anschluss des dritten Kondensators (C3) mit dem Steueranschluss des Schalters (Q1) verbunden ist, wobei ein zweiter Anschluss des dritten Kondensators (C3) geerdet ist, wobei eine Anode der dritten Diode (D3) geerdet ist, während eine Kathode der dritten Diode (D3) mit dem zweiten Anschluss des zweiten Kondensators (C2) verbunden ist, und wobei der zweite Anschluss des zweiten Kondensators (C2) dazu eingerichtet ist, einen Ausgangsanschluss der Schaltersteuereinheit (11) zu bilden.

4. Wake-up-Schaltung nach Anspruch 3, wobei
wenn das CP-Signal auf niedrigem Pegel ist, die Spannung auf dem zweiten Kondensator (C2) und auf dem dritten Kondensator (C3) in der Schaltersteuereinheit (11) beide 0 V beträgt, wobei der Ausgangsanschluss der Schaltersteuereinheit (11) dazu eingerichtet ist, den niedrigen Pegel auszugeben, wobei zum Zeitpunkt, zu dem das CP-Signal von einem niedrigen Pegel zu einem hohen Pegel wechselt, der zweite Kondensator (C2) kurzgeschlossen wird, wobei die Schaltersteuereinheit (11) dazu eingerichtet ist, das CP-Signal mit hohem Pegel an den Steueranschluss des Schalters (Q1) zu übertragen, wobei wenn das CP-Signal auf langanhaltendem hohem Pegel ist, eine Spannung auf dem dritten Kondensator (C3) aufgrund einer Gleichstromsperrwirkung des zweiten Kondensators (C2) 0 V beträgt, wobei der Ausgangsanschluss der Schaltersteuereinheit (11) dazu eingerichtet ist, einen niedrigen Pegel auszugeben, wobei wenn das CP-Signal auf niedrigem Pegel ist, die Energie auf dem dritten Kondensator (C3) über eine Entladeschaltung, die durch den zweiten Kondensator (C2) und die erste Widerstandseinheit (111) gebildet wird, entladen wird, und wobei die Energie auf dem zweiten Kondensator (C2) über die Entladeschaltung, die durch die erste Widerstandseinheit (111) und die dritte Diode (D3) gebildet wird, entladen wird.

5. Wake-up-Schaltung nach Anspruch 3, wobei
die Schaltersteuereinheit (11) ferner eine zweite Widerstandseinheit (112) umfasst, die zwischen dem ersten Anschluss der ersten Widerstandseinheit (111) und der Masse verbunden ist.

6. Wake-up-Schaltung nach Anspruch 3 oder 5, wobei
die Schaltersteuereinheit (11) ferner eine zweite Diode (D2) umfasst, wobei eine Anode der zweiten Diode (D2) mit dem zweiten Anschluss der ersten Widerstandseinheit (111) verbunden und eine Kathode der zweiten Diode (D2) mit dem ersten Anschluss der ersten Widerstandseinheit (111) verbunden ist.

7. Wake-up-Schaltung nach Anspruch 1, ferner umfassend:
eine erste Diode (D1), wobei eine Anode der ersten Diode (D1) dazu eingerichtet ist, ein CP-Signal zu empfangen, und wobei eine Kathode der ersten Diode (D1) mit dem ersten Anschluss der ersten Widerstandseinheit (111) verbunden ist.

8. Wake-up-Schaltung nach Anspruch 1, wobei
der Kondensator-Entladezweig (14) eine Entlade-Widerstandseinheit (141) und eine vierte Diode (D4) umfasst, wobei ein erster Anschluss der Entlade-Widerstandseinheit (141) mit dem ersten Anschluss des ersten Kondensators (C1) verbunden ist, wobei ein zweiter Anschluss der Entlade-Widerstandseinheit (141) mit einer Kathode der vierten Diode (D4) verbunden und eine Anode der vierten Diode (D4) mit dem zweiten Anschluss des ersten Kondensators (C1) verbunden ist.

9. Wake-up-Schaltung nach Anspruch 8, wobei
die Kathode der vierten Diode (D4) ferner mit der Hilfsspannungsquelle (Vaux) verbunden ist.

10. Elektronisches Gerät, umfassend:
eine Wake-up-Schaltung nach einem der Ansprüche 1 bis 9.

## Revendications

1. Circuit de réveil, comprenant :
une unité de commutation (12) comprenant un commutateur (Q1), dans lequel le commutateur (Q1) comporte une première borne, une seconde borne et une borne de commande, la seconde borne du commutateur (Q1) est mise à la terre ;
une unité de commande de commutation (11), dans lequel une borne d'entrée de l'unité de commande de commutation (11) est disposée pour recevoir un signal Pilote de commande (CP), et une borne de sortie de l'unité de commande de commutation (11) est connectée à la borne de commande du commutateur (Q1), de sorte que le commutateur (Q1) soit allumé ou éteint sur la base du signal CP, et dans lequel, lorsque le signal CP est à un niveau bas, le signal CP est transmis à travers l'unité de commande de commutation (11) et un niveau bas est délivré en sortie au niveau d'une borne de sortie de l'unité de commande de commutation (11), et dans lequel, au moment où le signal CP passe d'un niveau bas à un niveau haut, l'unité de commande de commutation (11) est configurée pour transmettre un signal CP de niveau haut à la borne de commande du commutateur (Q1), et dans lequel, lorsque le signal CP est à un niveau haut prolongé, le signal CP de niveau haut prolongé est transmis à travers l'unité de commande de commutation (11) et un niveau bas est délivré en sortie au niveau de la borne de sortie de l'unité de commande de commutation (11) ;
un premier condensateur (C1), dans lequel une première borne du premier condensateur (C1) est connectée à la première borne du commutateur (Q1), et une seconde borne du premier condensateur (C1) est disposée pour délivrer en sortie un signal de réveil ;
une unité de résistance de charge de condensateur, dans lequel une première borne de l'unité de résistance de charge de condensateur est connectée à la seconde borne du premier condensateur (C1), et la seconde borne de l'unité de résistance de charge de condensateur est connectée à une alimentation auxiliaire (Vaux), et lorsque le commutateur (Q1) est éteint, l'alimentation auxiliaire (Vaux) charge le premier condensateur (C1) à travers l'unité de résistance de charge de condensateur ; et
une branche de décharge de condensateur (14), dans lequel deux bornes de la branche de décharge de condensateur (14) sont connectées respectivement à deux bornes du premier condensateur (C1), et une valeur de résistance de la branche de décharge de condensateur (14) est bien supérieure à une valeur de résistance de l'unité de résistance de charge de condensateur, dans lequel le signal CP est configuré pour passer d'un niveau bas à un niveau haut lorsque le mode de réveil est un mode de réveil par branchement de pistolet, est en outre configuré pour passer d'un niveau bas à une onde PWM lorsque le mode de réveil est un mode de charge planifiée, et est en outre configuré pour passer d'un niveau haut à une onde PWM lorsque le mode de réveil est un mode de charge planifiée après branchement de pistolet.

2. Circuit de réveil selon la revendication 1, dans lequel :
en ce qui concerne le mode de réveil par branchement de pistolet, lorsque le signal CP est à un niveau bas, une tension du premier condensateur (C1) est de 0 V, et le signal CP de niveau bas est transmis à travers l'unité de commande de commutation (11) et un niveau bas est délivré en sortie au niveau de la borne de sortie de l'unité de commande de commutation (11), amenant le commutateur (Q1) à s'éteindre et un signal de réveil à être tiré vers un niveau haut, et dans lequel, au moment où le signal passe d'un niveau bas à un niveau haut, l'unité de commande de commutation (11) est configurée pour transmettre le signal CP de niveau haut à la borne de commande du commutateur (Q1), amenant le commutateur (Q1) à s'allumer et le signal de réveil est tiré vers le bas, et générant un signal de réveil sur front descendant, et dans lequel, lorsque le signal CP reste à un niveau haut, le signal CP de niveau haut prolongé est transmis à travers l'unité de commande de commutation (11), et un niveau bas est délivré en sortie au niveau de la borne de sortie de l'unité de commande de commutation (11), amenant le commutateur (Q1) à s'éteindre, le signal de réveil continuant à être tiré vers un niveau haut et restant à un niveau haut ;
en ce qui concerne le mode de charge planifiée, lorsque le signal CP est à un niveau bas, une tension du premier condensateur (C1) est de 0 V, et le signal CP de niveau bas est transmis à travers l'unité de commande de commutation (11) et un niveau bas est délivré en sortie au niveau de la borne de sortie de l'unité de commande de commutation (11), amenant le commutateur (Q1) à s'éteindre et un signal de réveil à être tiré vers un niveau haut, et dans lequel, au moment où le signal passe d'un niveau bas à un niveau haut, l'unité de commande de commutation (11) est configurée pour transmettre le signal CP de niveau haut à la borne de commande du commutateur (Q1), amenant le commutateur (Q1) à s'allumer et le signal de réveil à être tiré vers le bas, et générant un signal de réveil sur front descendant, et dans lequel, pendant la période du niveau haut du signal CP, une alimentation auxiliaire (Vaux) est configurée pour charger le premier condensateur (C1) à travers l'unité de résistance de charge de condensateur et le commutateur (Q1) allumé, et dans lequel, lorsque le signal CP passe du niveau haut de l'onde PWM à un niveau bas, le signal CP de niveau bas est transmis à travers l'unité de commande de commutation (11) et un niveau bas est délivré en sortie au niveau de la borne de sortie de l'unité de commande de commutation (11), amenant le commutateur (Q1) à s'éteindre et un signal de réveil à être tiré vers un niveau haut, et l'énergie dans le premier condensateur (C1) étant déchargée à travers la branche de décharge de condensateur (14), et dans lequel le premier condensateur (C1) continue d'être chargé au niveau haut suivant de l'onde PWM du signal CP, et étant donné qu'une valeur de résistance de la branche de décharge de condensateur (14) est bien supérieure à une valeur de résistance de l'unité de résistance de charge de condensateur, un temps de décharge du premier condensateur (C1) est bien supérieur à un temps de charge, amenant le premier condensateur (C1) à se charger progressivement et le signal de réveil à rester au niveau haut ; et
en ce qui concerne le mode de charge planifiée après branchement de pistolet, lorsque le signal CP est à un niveau haut prolongé, le signal CP de niveau haut prolongé est transmis à travers l'unité de commande de commutation (11), et un niveau bas est délivré en sortie au niveau de la borne de sortie de l'unité de commande de commutation (11), amenant le commutateur (Q1) à s'éteindre, et le signal de réveil étant tiré vers un niveau haut, et dans lequel, lorsque le signal CP passe du niveau haut à un niveau bas, le signal CP de niveau bas est transmis à travers l'unité de commande de commutation (11) et un niveau bas est délivré en sortie au niveau de la borne de sortie de l'unité de commande de commutation (11), amenant le commutateur (Q1) à s'éteindre et un signal de réveil à être tiré vers un niveau haut, et dans lequel, au moment où le signal passe d'un niveau bas à un niveau haut, l'unité de commande de commutation (11) est configurée pour transmettre le signal CP de niveau haut à la borne de commande du commutateur (Q1), amenant le commutateur (Q1) à s'allumer et le signal de réveil à être tiré vers le bas, et générant un signal de réveil sur front descendant, et dans lequel, pendant la période du niveau haut du signal CP, une alimentation auxiliaire (Vaux) est configurée pour charger le premier condensateur (C1) à travers l'unité de résistance de charge de condensateur et le commutateur (Q1) allumé, et dans lequel, lorsque le signal CP passe du niveau haut de l'onde PWM à un niveau bas, le signal CP de niveau bas est transmis à travers l'unité de commande de commutation (11) et un niveau bas est délivré en sortie au niveau de la borne de sortie de l'unité de commande de commutation (11), amenant le commutateur (Q1) à s'éteindre et un signal de réveil à être tiré vers un niveau haut, et l'énergie dans le premier condensateur (C1) étant déchargée à travers la branche de décharge de condensateur (14), et dans lequel le premier condensateur (C1) continue d'être chargé au niveau haut suivant de l'onde PWM du signal CP, et étant donné qu'une valeur de résistance de la branche de décharge de condensateur (14) est bien supérieure à une valeur de résistance de l'unité de résistance de charge de condensateur, un temps de décharge du premier condensateur (C1) est bien supérieur à un temps de charge, amenant le premier condensateur (C1) à se charger progressivement et le signal de réveil à rester au niveau haut.

3. Circuit de réveil selon la revendication 2, dans lequel :
l'unité de commande de commutation (11) comprend un deuxième condensateur (C2), un troisième condensateur (C3), une première unité de résistance (111) et une troisième diode (D3), et dans lequel une première borne de la première unité de résistance (111) est une borne d'entrée de l'unité de commande de commutation (11) configurée pour recevoir le signal CP, une seconde borne de la première unité de résistance (111) est connectée à une première borne du deuxième condensateur (C2), une seconde borne du deuxième condensateur (C2) est connectée à une borne de commande du commutateur (Q1), une première borne du troisième condensateur (C3) est connectée à la borne de commande du commutateur (Q1), une seconde borne du troisième condensateur (C3) est mise à la terre, une anode de la troisième diode (D3) est mise à la terre, une cathode de la troisième diode (D3) est connectée à la seconde borne du deuxième condensateur (C2), et la seconde borne du deuxième condensateur (C2) est configurée pour former une borne de sortie de l'unité de commande de commutation (11).

4. Circuit de réveil selon la revendication 3, dans lequel :
lorsque le signal CP est au niveau bas, la tension du deuxième condensateur (C2) et du troisième condensateur (C3) dans l'unité de commande de commutation (11) est de 0 V, la borne de sortie de l'unité de commande de commutation (11) est configurée pour délivrer en sortie le niveau bas, et dans lequel, au moment où le signal CP passe du niveau bas au niveau haut, le deuxième condensateur (C2) est court-circuité, et l'unité de commande de commutation (11) est configurée pour transmettre le signal CP de niveau haut à la borne de commande du commutateur (Q1) ; et dans lequel, lorsque le signal CP est au niveau haut prolongé, une tension du troisième condensateur (C3) est de 0 V en raison d'un effet de blocage CC du deuxième condensateur (C2), et la borne de sortie de l'unité de commande de commutation (11) est configurée pour délivrer en sortie un niveau bas, et dans lequel, lorsque le signal CP est au niveau bas, l'énergie sur le troisième condensateur (C3) est déchargée à travers un circuit de décharge formé par le deuxième condensateur (C2) et la première unité de résistance (111), et l'énergie sur le deuxième condensateur (C2) est déchargée à travers le circuit de décharge formé par la première unité de résistance (111) et la troisième diode (D3).

5. Circuit de réveil selon la revendication 3, dans lequel :
l'unité de commande de commutation (11) comprend en outre une seconde unité de résistance (112) connectée entre la première borne de la première unité de résistance (111) et la terre.

6. Circuit de réveil selon la revendication 3 ou 5, dans lequel :
l'unité de commande de commutation (11) comprend en outre une deuxième diode (D2), une anode de la deuxième diode (D2) étant connectée à la seconde borne de la première unité de résistance (111), et une cathode de la deuxième diode (D2) étant connectée à la première borne de la première unité de résistance (111).

7. Circuit de réveil selon la revendication 1, comprenant en outre :
une première diode (D1), une anode de la première diode (D1) étant configurée pour recevoir un signal CP, et une cathode de la première diode (D1) étant connectée à la première borne de la première unité de résistance (111).

8. Circuit de réveil selon la revendication 1, dans lequel :
la branche de décharge de condensateur (14) comprend une unité de résistance de décharge (141) et une quatrième diode (D4), une première borne de l'unité de résistance de décharge (141) étant connectée à la première borne du premier condensateur (C1), une seconde borne de l'unité de résistance de décharge (141) étant connectée à une cathode de la quatrième diode (D4), et une anode de la quatrième diode (D4) étant connectée à la seconde borne du premier condensateur (C1).

9. Circuit de réveil selon la revendication 8, dans lequel :
la cathode de la quatrième diode (D4) est en outre connectée à l'alimentation auxiliaire (Vaux).

10. Dispositif électronique, comprenant :
un circuit de réveil selon l'une quelconque des revendications 1 à 9.
